# EUROPÄISCHE PATENTSCHRIFT

(11) **EP 0 948 985 B1**
(45) Veröffentlichungstag und Bekanntmachung des Hinweises auf die Patenterteilung: **11.09.2002**
(21) Anmeldenummer: 99106581.4
(22) Anmeldetag: 31.03.1999
(51) Int. Cl.: B01D 46/52

(54) **Versteifungsleiste für ein Filterelement mit zick-zack-förmig gefaltetem Filterbahnmaterial**
Stiffening strip for a filter element with pleated filter material
Bande de raidissement pour un élément de filtration comprenant une matière filtrante plissée

(30) Priorität: 11.04.1998 DE 19816238
(43) Veröffentlichungstag der Anmeldung: 13.10.1999
(73) Patentinhaber: MAHLE Filtersysteme GmbH, 70376 Stuttgart (DE)
(72) Erfinder: Schneider, Horst, 71336 Waiblingen (DE); Waibel, Hans, 71686 Remseck /Aldingen (DE)
(74) Vertreter: Patentanwalts-Partnerschaft Rotermund + Pfusch

(56) Entgegenhaltungen:
- EP-A- 0 623 377
- DE-C- 19 512 678
- DE-C- 19 529 618
- US-A- 4 547 950
- US-A- 5 531 892
- US-A- 5 667 545

## Beschreibung

Die Erfindung betrifft eine Versteifungsleiste für ein plattenförmiges Filterelement mit zick-zack-förmig gefaltetem Filterbahnmaterial.

Aus DE 42 27 744 A1 ist ein plattenförmiges Filterelement mit zick-zack-förmig gefaltetem Filterbahnmaterial bekannt, dessen Aufbau und Einfassung ein Verwölben des Filterelementes aus der Plattenebene heraus erlaubt. Die beiden seitlichen Einfassungen des Filterelementes, die an den Faltenstirnseiten des Filterbahnmaterials vorgesehen sind, sind derart elastisch ausgebildet, daß durch Ziehen an dem Filterelement in Richtung quer zu den Falten eine Faltenabstandsvergrößerung und durch ein Zusammendrücken des Filterelements in dieser Richtung eine Faltenabstandsverkleinerung erfolgt. Zur Vermeidung derartiger Faltenabstandsänderungen bei gleichzeitiger Aufrechterhaltung der Verwölbbarkeit des Filterelementes sind in Längsrichtung des Filterelementes, das heißt quer zu den Falten, flexible Längsstreifen auf den Faltenrücken aufgeklebt. Derart aufgeklebte Streifen stellen sicher, daß die Falten ihren ursprünglich vorgegebenen gegenseitigen Abstand nicht verändern können. Diese Streifen bewirken auch, daß flexible Quereinfassungen des Filterelementes, wenn auf diese von außen in Längsrichtung der Streifen eine Kraft ausgeübt wird, nicht zu den Falten hin durchgebogen werden können, da einer solchen Durchbiegung der feste Verbund aus Längsstreifen und Falten entgegenwirkt.

Aus US 5,667,545 ist ein Plattenfilterelement aus zick-zackförmigem, in einem steifen Rahmen eingefasstem Filtermaterial und einer kammartigen Verteifungsleiste für die einzelnen Falten des Bahnenmaterials bekannt. Die dortige Versteifungsleiste ist fest mit dem Filterrahmen verbunden, wobei diese feste Verbindung durch eine einstückige Herstellung des Rahmens zusammen mit der Versteifungsleiste erzielt wird.

Die Erfindung beschäftigt sich mit dem Problem, ein gattungsgemäßes Filterelement mit Eigenschaften des vorstehend beschriebenen, aus DE 42 27 744 A1 bekannten Filterelementes auf eine einfachere Art zu schaffen und dabei insbesondere eine besonders gute Versteifungswirkung zu erreichen.

Gelöst wird dieses Problem erfindungsgemäß durch eine Ausgestaltung einer gattungsgemäßen Versteifungsleiste nach den kennzeichnenden Merkmalen des Patentanspruchs 1.

Die Erfindung beruht auf dem allgemeinen Gedanken, die gewünschte Versteifungswirkung in Richtung senkrecht zu den Falten, das heißt in Längsrichtung eines Filterelementes, durch ein einfaches Einstecken eines Kammes zu erreichen. Dabei ist es wichtig, daß die Versteifungsleiste, das heißt der Kamm, sich bei einem Verwölben des Filterelementes nicht von den Falten lösen kann. Zu diesem Zweck sind benachbarte Zähne des Kammes als Klammern ausgebildet, in denen die dort aufgenommene Falte kraftschlüssig derart eingeklemmt wird, daß der Kamm sich von dem Filterbahnmaterial an dieser Stelle nicht lösen kann. Es ist ausreichend, wenn über die Länge des Kammes lediglich einzelne, voneinander beabstandete Klammern vorgesehen sind. Die Zähne des Kammes sollten zweckmäßigerweise so ausgebildet sein, daß jede Falte des Filterbahnmaterials zwischen zwei Zähnen lagefixiert zu liegen kommen kann. In der von den Zähnen aufgespannten Ebene muß der Längssteg des Kammes elastisch biegsam sein, während er in der Plattenebene möglichst biegesteif sein sollte.

Bei einem Filterelement können je nach dessen Größe und Art der Randeinfassungen mehrere oder auch nur ein Kamm eingesetzt sein.

Bei einer zweckmäßigen Ausgestaltung der Erfindung sind die Enden der Versteifungsleiste, die über die gesamte Länge des Filterelementes reicht, als Querleisten ausgebildet. Hierdurch erhält eine flexible Quereinfassung des Filterelementes, das heißt eine Einfassung die an den parallel zu den Falten verlaufenden Enden liegt, eine erhöhte Steifigkeit gegen ein Eindrücken in Richtung auf die Falten des Filterelementes, deren Abstand durch ein solches Eindrücken verringert wird.

Es reicht häufig bereits aus, bei einem gattungsgemäßen Filterelement lediglich einen etwa in der Mitte der Breite der Falten eingesetzten Kamm zu verwenden, der sich über die gesamte Länge des Filterelementes bis zu den Quereinfassungen erstreckt.

Die erfindungsgemäßen Kämme können auch im Bereich der die Stirnkanten der Falten dichtenden Seiteneinfassungen angebracht sein. In einem solchen Fall können die Quereinfassungen als Rahmenteile fest mit den an den Längsseiten eingesetzten Kämmen verbunden sein, so daß insgesamt ein geschlossener Rahmen vorliegt. Die Kämme als seitliche Rahmenteile gewährleisten durch ihren Aufbau eine gewünschte Verwölbbarkeit des Filterelementes. Die Kämme besitzen, wenn sie an den Längsseiten des Filterelementes als Rahmenteile eingesetzt sind, keine Dichtfunktion für die Seitenbereiche des Filterelementes. Die Dichtfunktion wird in diesen Fällen von üblichen seitlichen Dichtungen, die beispielsweise aufgeklebte oder geschweißte elastische Streifen sein können, erfüllt.

Bei einem Einsatz der erfindungsgemäßen Kämme in den Längsseitenbereichen eines Filterelementes kann der jeweils an den Füßen der Kämme liegende Längssteg ein Winkelprofil mit einer in Plattenebene nach außen ragenden Flanke sein. Diese Flanken können dazu benutzt werden, um ein Filterelement schubladenartig in einen Aufnahmerahmen eines Filtergehäuses einschieben zu können. Auch in Fällen, in denen erfindungsgemäße Kämme in den Längsseitenbereichen vorgesehen sind, kann mindestens ein weiterer Kamm in dem Bereich zwischen den Längsseiten vorgesehen sein, um insbesondere die Quereinfassungen gegen die Möglichkeit eines Eindrückens nach Innen zu versteifen.

Nachstehend noch näher beschriebene Ausführungsbeispiele der Erfindung sind in der Zeichnung dargestellt.

In dieser zeigen
- Fig. 1: die Ansicht einer als Kamm ausgebildeten Versteifungsleiste,
- Fig. 2: eine Draufsicht auf die Versteifungsleiste nach Fig. 1,
- Fig. 3: eine Draufsicht auf eine Verstärkungsleiste in einer Ausführung nach Fig. 2 in einem auf ein zick-zackförmig gefaltetes Filterbahnmaterial eines Filterelementes aufgesteckten Zustand,
- Fig. 4: einen Schnitt durch das Filterelement nach Linie IV-IV in Fig. 3,
- Fig. 5: eine Ansicht einer als Kamm ausgebildeten Verstärkungsleiste mit einem winkelförmig ausgebildeten Längssteg in einem in ein zick-zack-förmig gefaltetes Filterbahnmaterial eines Filterelementes eingesteckten Zustand,
- Fig. 6: die Draufsicht auf ein Filterelement mit zick-zackförmig gefaltetem Filterbahnmaterial und einem umlaufend durchgehenden Rahmen,
- Fig. 7: eine perspektivische Ansicht eines plattenförmigen Filterelementes in einem gewölbten Zustand mit einem aufgebrochenen Randbereich.

Eine als Kamm ausgebildete Verstärkungsleiste 1 besteht aus einem Längssteg 2 und von diesem ausgehenden einzelnen Zähnen 3. Die Zähne 3 haben eine Form und Länge, durch die die Verstärkungsleiste 1 geeignet ist, auf zick-zack-förmig gefaltetes Filterbahnmaterial 6 aufgesteckt zu werden. In aufgestecktem Zustand sollen die einzelnen Falten 7 des Filterbahnmaterials 6 etwa formschlüssig zwischen den einzelnen Zähnen 3 und dem Längssteg 2 der Verstärkungsleiste 1 aufgenommen sein.

Jeweils in einem vorgegebenen Abstand zueinander liegende Paare benachbarter Zähne 3 sind als Federklammern 4 ausgebildet. In diesen Federklammern 4 liegende Falten 7 eines Filterbahnmaterials 6 sind dort kraftschlüssig einspannbar, so daß die Verstärkungsleiste 1 gegen ein Herausschieben aus den Falten 7 eines Filterbahnmaterials 6, auf die sie aufgesteckt ist, gesichert ist.

Die Enden der Verstärkungsleiste 1 sind als Querstege 5 mit einem U-förmigen Querschnitt ausgebildet. Die Öffnung des U-Profils weist dabei in die gleiche Richtung wie die Zwischenräume zwischen den einzelnen Kämmen 3.

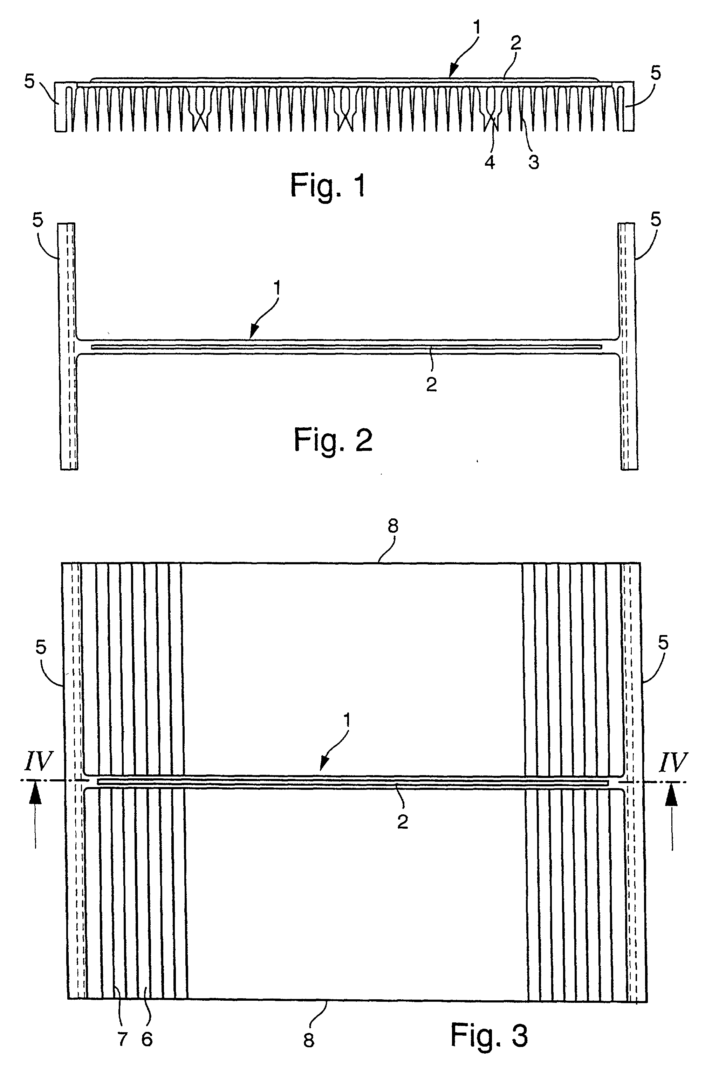

In Fig. 3 ist ein Filterelement mit einem zick-zack-förmig gefalteten Filterbahnmaterial 6 gezeigt, in das eine Verstärkungsleiste 1 mit Querstegen 5 integriert ist.

Das Filterbahnmaterial 6 mit den angedeuteten Falten 7 ist an den Stirnseiten der Falten 7 mit einem elastischen aufgeklebten Streifen 8 gedichtet. Durch die elastische Eigenschaft des Streifens 8 ist das Filterelement wölbbar. Aus dem elastischen Material der Streifen 8 ergibt sich allerdings die Konsequenz, daß die Falten 7 des Filterbahnmaterials 6 nicht gegen ein Verschieben relativ zueinander gesichert sind. Eine solche Sicherung bietet die in der Quermitte des Filterelementes eingesetzte Verstärkungsleiste 1, deren Zähne 3 in die einzelnen Faltenabstände lagefixierend eingreifen. Durch eine Elastizität des Längssteges 2 der Verstärkungsleiste 1 in Richtung der von den Zähnen 3 aufgespannten Ebene bleibt das Filterelement weiterhin wölbbar.

Die von der Verstärkungsleiste 1 ausgehenden Querstege 5 erstrecken sich in Faltenrichtung über die gesamte Breite des Filterelementes. Gegenüber den Querstegen 5 ist das Filterbahnmaterial 6 dadurch gedichtet, daß die jeweiligen Faltenenden des Filterbahnmaterials 6 in die U-Profile der Querstege 5 eingeschoben werden. Eine Dichtung in den Längsseitenbereichen gegenüber den dortigen Steifen 8 ist durch eine Verklebung der Streifen 8 mit den Querstegen 5 möglich.

Durch die Verstärkungsleiste 1 ist das Filterelement auf der einen Seite in gewünschtem Maße wölbbar und auf der anderen Seite ist durch die Verstärkungsleiste 1 sichergestellt, daß einschließlich der Querstege 5 eine Relativverschiebung der Falten 7 quer zur Faltenlängsrichtung nicht stattfinden kann.

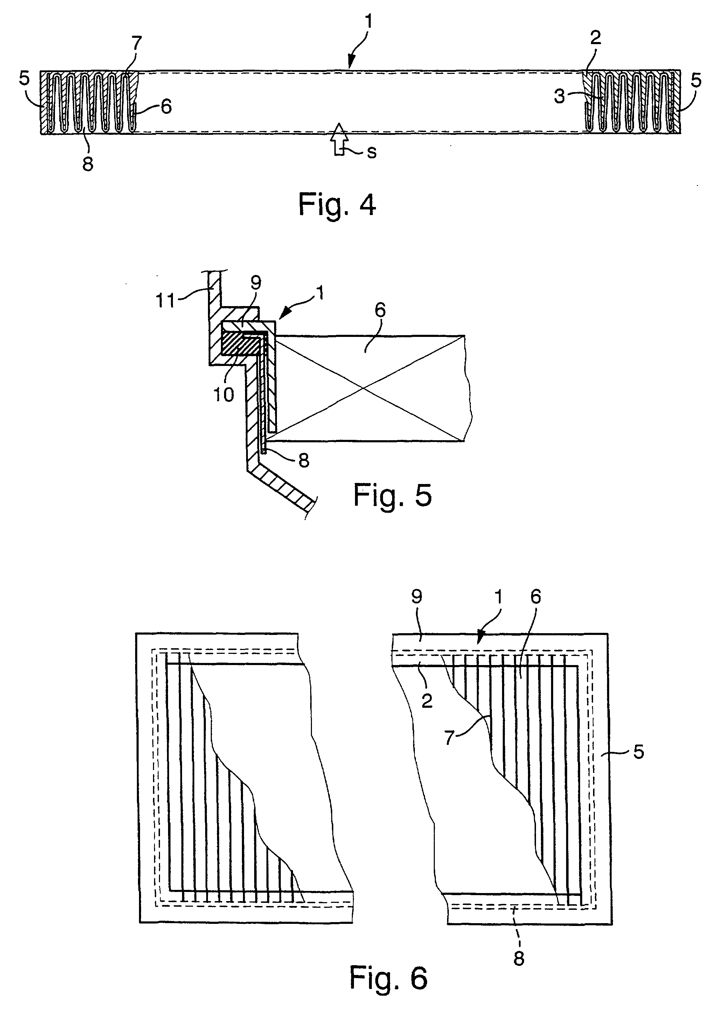

Bei dem in Fig. 4 dargestellten Schnitt durch das Filterelement aus Fig. 3 deutet ein Pfeil S die Richtung an, in der das Filterelement durchströmt wird.

Bei der Ausführung nach Fig. 5 ist eine Verstärkungsleiste 1 in dem seitlichen Randbereich eines Filterelementes eingesetzt. Die seitliche Dichtung wird dort von einem Streifen 8 bewirkt. Die Verstärkungsleiste 1 hat damit in Bezug auf das Filterbahnmaterial 6 lediglich eine Versteifungs- und keine Dichtfunktion.

Der Längssteg 2 dieser Verstärkungsleiste 1 ist als Winkelprofil mit einer in Plattenebene nach außen abstehenden Flanke 9 ausgebildet. An diese Flanke 9 kann unter Einschluß des Randbereiches eines Streifens 8 eine Dichtung angeformt sein. Mit den Flanken 9 kann das Filterelement schubladenartig in ein mit entsprechenden Aufnahmenuten ausgerüstetes Filtergehäuse 11 eingeschoben werden.

Bei der Ausführung nach Fig. 6 liegt ein Filterelement mit zick-zack-förmig gefaltetem Filterbahnmaterial 6 vor, bei dem die Längsseiten mit Verstärkungsleisten 1 verstärkt sind, die an ihren Enden fest mit dem jeweiligen Quersteg 5 des Filterelementes verbunden sind. Die seitlichen Verstärkungsleisten 1 und die Querstege 5 bilden damit einen umlaufenden geschlossenen Rahmen.

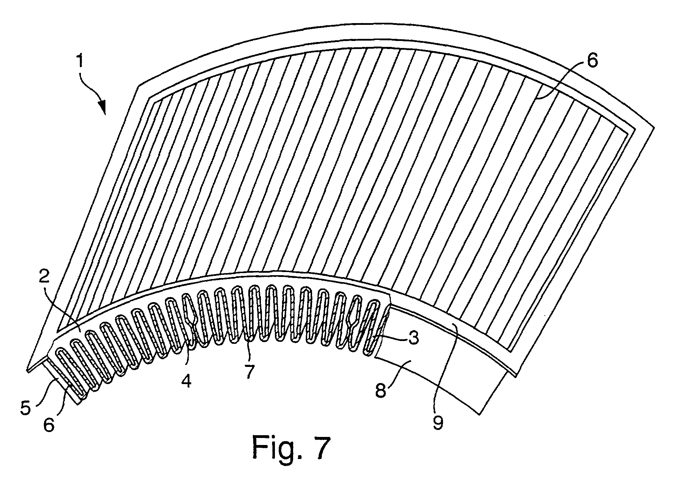

Das Filterelement nach Fig. 6 ist durch die kammartige Ausbildung der seitlich angeordneten Verstärkungsleisten 1 in einer Art wölbbar, wie sie in Fig. 7 dargestellt ist. In dem in der Fig. 7 aufgebrochenen Randbereich ist das Filterbahnmaterial 6 geschnitten dargestellt, da es geringfügig seitlich über die Zähne 3 der Verstärkungsleiste 1 hinaus ragt. Dieser Überstand ist erforderlich, damit der Dicht-Streifen 8 ohne einen festen Kontakt zu den Zähnen 3 mit den Stirnkanten der Falten 7 des Filterbahnmaterials dicht verbunden werden kann.

## Patentansprüche

1. Versteifungsleiste (1) eines plattenförmigen Filterelementes mit zick-zack-förmig gefaltetem Filterbahnmaterial (6), die in der Form eines Kammes mit einem durchgehenden Längssteg (2) und von diesem ausgehenden Zähnen (3) ausgebildet ist und bei der
- die Zähne (3) des Kammes zur im wesentlichen formschlüssigen Aufnahme der Falten (7) des Filterbahnmaterials (6) geeignet sind,
- voneinander beabstandete, aus benachbarten Zähnen (3) bestehende Zahnpaare als Federklammern (4) für ein kraftschlüssiges Einspannen jeweils einer Falte eines Filterbahnmaterials (6) ausgebildet sind,
- der Längssteg (2) der Versteifungsleiste (1) in der von den Zähnen (3) aufgespannten Längsebene elastisch biegsam ist, während er gegen seitliches Ausknicken erheblich biegesteifer ausgebildet ist.

2. Versteifungsleisten nach Anspruch 1,
**dadurch gekennzeichnet,**
**daß** diese an ihren Enden als Querstege (5) ausgebildet oder mit jeweils einem solchen verbunden sind.

3. Verstärkungsleisten nach Anspruch 1 oder 2,
**dadurch gekennzeichnet,**
**daß** die Querstege (5) an den Enden der Verstärkungsleiste (1) ein U-Profil mit in Richtung der Zähne (3) verlaufenden und zu deren freien Enden hin frei auslaufenden U-Schenkeln aufweisen.

4. Filterelement mit zick-zack-förmig gefaltetem Filterbahnmaterial und in Richtung benachbarter Falten zumindest zwischen den von den Stirnkanten der Falten gebildeten Seitenrändern flexibel aneinander liegenden Falten,
**dadurch gekennzeichnet,**
**daß** zumindest eine Versteifungsleiste (1) nach einem der Ansprüche 1 bis 3 zwischen den Seitenrändern über die gesamte quer zu den Falten (7) verlaufende Länge des Filterelementes eingesetzt ist.

5. Filterelement mit zick-zack-förmig gefaltetem Filterbahnmaterial mit jeweils einer Versteifungsleiste nach einem der Ansprüche 1 bis 3 als Seitenrahmen an den Stirnkanten der Falten (7) des Filterbahnmaterials (6).

6. Filterelement nach Anspruch 4 oder 5,
**dadurch gekennzeichnet,**
**daß** die Querstege (5) an den Enden mindestens einer Verstärkungsleiste (1) als Querrahmen des Filterelementes ausgebildet sind.

7. Filterelement nach einem der Ansprüche 4 bis 6,
**dadurch gekennzeichnet,**
**daß** jede Falte (7) des Filterbahnmaterials (6) zwischen zwei benachbarten Zähnen (3) einer eingesetzten Verstärkungsleiste (1) fixiert ist.

8. Versteifungsleiste nach einem der Ansprüche 1 bis 3 als Seitenrahmen eines Filterelementes nach einem der Ansprüche 4 bis 7,
**dadurch gekennzeichnet,**
**daß** der Längssteg (2) der Verstärkungsleiste (1) als Winkelprofil mit einer in Plattenebene nach außen abstehenden Flanke (9) ausgebildet ist.

## Claims

1. Stiffening strip (1) for a plate-like filter element with filter material (6) pleated is a zigzag shape designed in the form of a comb with a continuous longitudinal web (2) and teeth (3) issuing thereform and in which
- the teeth (3) of the comb are capable of receiving the folds (7) of the filter material (6) in a substantially interlocking manner,
- pairs of teeth consisting of spaced-apart adjacent teeth (3) are designed as spring clips (4) for non-positive fixing of a respective fold of a filter material (6),
- the longitudinal web (2) of the stiffening strip (1) is elastically flexible in the longitudinal plane bridged by the teeth (3) while it is designed so as to be considerably more resistant to lateral bowing.

2. Stiffening strips according to claim 1, **characterised in that** these are designed as transverse webs (5) at their ends or are connected to a respective transverse web.

3. Stiffening strips according to claim 1 or 2, **characterised in that** at the ends of the stiffening strip (1) the transverse webs (5) have a U-profile with arms of the U extending in the direction of the teeth (3) and running freely toward the free ends thereof.

4. Filter element with pleated filter material and flexible mutually abutting folds at least between the side edges formed by the front edges of the folds in the direction of adjacent folds, **characterised in that** at least one stiffening strip (1) according to any of claims 1 to 3 is inserted between the side edges over the entire length of the filter element extending transversely to the folds (7).

5. Filter element with pleated filter material with a respective stiffening strip according to any one of claims 1 to 3 as a side frame on the front edges of the folds (7) of the filter material (6).

6. Filter element according to claim 4 or 5, **characterised in that** at the ends of at least one stiffening strip (1) the transverse webs (5) are designed as transverse frames of the filter elements.

7. Filter element according to any one of claims 4 to 6, **characterised in that** each fold (7) of the filter material (6) is fixed between two adjacent teeth (3) of an inserted stiffening strip (1).

8. Stiffening strip according to any one of claims 1 to 3 as side frame of a filter element according to any of claims 4 to 7, **characterised in that** the longitudinal web (2) of the stiffening strip (1) is designed as an angular profile with a flank (9) projecting outwards in the plate plane.

## Revendications

1. Barre de renfort (1) d'un élément filtrant en forme de plaque avec un matériau en feuille (6) plié en zigzag, qui est réalisée en forme d'un peigne avec un profil longitudinal (2) continu et des dents (3) partant de ce dernier, et sur laquelle
- les dents (3) du peigne se prêtent à un logement essentiellement par coopération de forme des plis (7) du matériau en feuille (6),
- des paires de dents distantes les unes des autres, composées de dents adjacentes (3), sont réalisées sous forme de pinces élastiques (4) pour un serrage par force d'adhérence de respectivement un pli d'un matériau en feuille (6),
- le profil longitudinal (2) de la barre de renfort (1) est flexible par élasticité dans le plan longitudinal fixé par les dents (3), tandis qu'il a une réalisation considérablement plus rigide en flexion contre un flambage latéral.

2. Barres de renfort suivant la revendication 1, **caractérisées en ce qu'**elles sont réalisées sur leurs extrémités sous forme de profils transversaux (5) ou sont assemblées avec respectivement un tel profil.

3. Barres de renfort suivant l'une des revendications 1 et 2, **caractérisées en ce que** les profils transversaux (5) sur les extrémités de la barre de renfort (1) présentent un profilé en U avec des branches en U s'étendant en direction des dents (3) et se terminant librement en direction des extrémités de ces dernières.

4. Elément filtrant avec un matériau en feuille plié en zigzag et des plis s'appliquant mutuellement en souplesse en direction de plis adjacents, au moins entre les bords latéraux formés par les bords frontaux des plis, **caractérisé en ce qu'**au moins une barre de renfort (1), suivant l'une des revendications 1 à 3, est mise en place entre les bords latéraux sur toute la longueur de l'élément filtrant, s'étendant transversalement aux plis (7).

5. Elément filtrant avec un matériau en feuille plié en zigzag avec respectivement une barre de renfort suivant l'une des revendications 1 à 3, comme cadre latéral sur les bords frontaux des plis (7) du matériau en feuille (6).

6. Elément filtrant suivant l'une des revendications 4 et 5, **caractérisé en ce que** les profils transversaux (5) sur les extrémités d'au moins une barre de renfort (1) sont réalisés sous forme de cadres transversaux de l'élément filtrant.

7. Elément filtrant suivant l'une des revendications 4 à 6, **caractérisé en ce que** chaque pli (7) du matériau en feuille (6) est fixé entre deux dents (3) adjacentes d'une barre de renfort (1) mise en place.

8. Barre de renfort suivant l'une des revendications 1 à 3 comme cadre latéral d'un élément filtrant suivant l'une des revendications 4 à 7, **caractérisée en ce que** le profil longitudinal (2) de la barre de renfort (1) est réalisé sous forme de cornière avec un flanc (9) dépassant vers l'extérieur dans le plan de la plaque.
